# EUROPÄISCHE PATENTSCHRIFT

(11) **EP 1 441 893 B1**
(45) Veröffentlichungstag und Bekanntmachung des Hinweises auf die Patenterteilung: **14.09.2005**
(21) Anmeldenummer: 02758432.5
(22) Anmeldetag: 06.08.2002
(51) Int. Cl.: B29C 45/42

(54) **VORRICHTUNG ZUM ENTNEHMEN UND/ODER EINLEGEN VON WERKSTÜCKEN IN EIN SPRITZGIESSWERKZEUG EINER SPRITZGIESSMASCHINE**
DEVICE FOR REMOVING AND/OR INSERTING WORKPIECES INTO AN INJECTION MOLD OF AN INJECTION MOLDING MACHINE
DISPOSITIF POUR PRELEVER ET/OU INSERER DES PIECES DANS UN MOULE D'INJECTION D'UNE PRESSE D'INJECTION

(30) Priorität: 26.10.2001 DE 10152936
(43) Veröffentlichungstag der Anmeldung: 04.08.2004
(73) Patentinhaber: Krauss-Maffei Kunststofftechnik GmbH, 80997 München (DE)
(72) Erfinder: GEISSLER, Anton, 85386 Eching (DE); MENK, Michael, 85241 Hebertshausen (DE)
(74) Vertreter: Zollner, Richard
(86) Internationale Anmeldenummer: PCT/EP2002/008740
(87) Internationale Veröffentlichungsnummer: WO 2003/037601

(56) Entgegenhaltungen:
- DE-A- 19 939 228
- DE-A- 19 950 726
- US-A- 4 204 824
- US-A- 4 368 018

## Beschreibung

Die Erfindung bezieht sich auf eine Vorrichtung zum Entnehmen und/oder Einlegen von Werkstücken in ein Spritzgießwerkzeug einer insbesondere Kunststoff verarbeitenden Spritzgießmaschine gemäß dem Oberbegriff des Anspruchs 1.

Bei Spritzgießmaschinen muß zyklisch das gespritzte Werkstück aus der geöffneten Maschine entnommen werden, bevor ein neuer Einspritzvorgang gestartet werden kann. Aus der DE-A-199 39 228 ist eine Entnahmevorrichtung bekannt, bei der ein durch die Relativbewegung zwischen fester und beweglicher Werkzeugaufspannplatte zwangsgesteuertes Globoid-Kurvengetriebe einen schwenkbaren Hebel mit daran befestigter Greifmechanik antreibt. Das Globoid-Kurvengetriebe ist hier an der beweglichen Werkzeugaufspannplatte gelagert und wird durch eine Zahnstange angetrieben, die fest mit der festen Werkzeugaufspannplatte verbunden ist.

Nachteilig bei einer solchen Vorrichtung ist, daß beim Öffnen des Werkzeugs über einen bestimmten voreingestellten Hub hinaus, wie er im Normalbetrieb vorgesehen ist, die Zahnstange das Globoid-Kurvengetriebe weiter betreibt, und dadurch der schwenkbare Hebel in eine ungünstige Position verfahren wird. Bei noch weiterem Öffnen des Werkzeugs besteht die Gefahr, daß die Zahnstange nicht mehr in das an der Antriebswelle des Globoid-Kurvengetriebes sitzende Stirnrad eingreift und die Lagerung der Zahnstange am Getriebe gelöst wird.

Große Öffnungsweiten der Werkzeugaufspannplatten kommen beim Betrieb einer Spritzgießmaschine aber durchaus vor, sei es bei einer fehlerhaften Übersteuerung des Schließmechanismus oder aber beim weiten Öffnen wie es für Wartungsarbeiten oder für Werkzeugwechsel üblich ist. Soll nach einem solchen weiten Öffnen die Spritzgießmaschine wieder in den Betriebszustand gebracht werden, muß darauf geachtet werden, daß der Eingriff von Zahnstange und Getriebe wieder passgenau erfolgt, und daß der Ansteuerungspunkt des Globoid-Kurvengetriebes exakt gesetzt ist, um eine präzise abgestimmte Bewegung des schwenkbaren Hebels zu gewährleisten.

Aufgabe der vorliegenden Erfindung ist es, eine Entnahmevorrichtung bzw. eine Beladevorrichtung für eine Spritzgießmaschine bereitzustellen, bei der die präzise Bahnabfahrung durch den Greiferarm nicht durch die Länge der Zahnstange und eventuelles Überfahren einer vorgegebenen Betriebsendlage beeinflußt wird.

Diese Aufgabe wird durch eine Vorrichtung gemäß den Merkmalen des Anspruchs 1 gelöst.

Für den Antrieb des Greiferarmes, an dessen Ende ein Aufnehm- bzw. Greifmechanismus für die Entnahme und/oder das Einlegen der Werkstücke vorgesehen ist und der um eine Achse geschwenkt wird, die parallel zur Öffnungsrichtung des Werkzeugs liegt, wird ein Globoid-Kurvengetriebe eingesetzt. Dieses Globoid-Kurvengetriebe wird durch die Relativbewegung von fester und beweglicher Werkzeugaufspannplatte zwangsgesteuert. Globoid-Kurvengetriebe kommen vor allem dann zum Einsatz, wenn Wegstrecken hochpräzise und beliebig oft wiederholbar abgefahren werden müssen. Dies trifft auf die Schwenkbewegung des Greiferarms zu, die so eingestellt werden muß, daß beim Öffnen des Werkzeugs der Arm schnellstmöglich aber berührungslos in die Greifposition gefahren wird, wo der Greifmechanismus das Werkstück aufnimmt oder auch ablegt. Beim anschließenden Schließen des Werkzeugs durchläuft der Greiferarm mit dem Werkstück die Schwenkbewegung gegenläufig und schwenkt aus der Öffnung heraus. Auch hierbei darf es zu keinerlei Behinderung zwischen Spritzgießmaschine und Greiferarm mit Werkstück kommen. Die Genauigkeit der Bahneinstellung bestimmt die mit der Spritzgießmaschine erreichbaren Taktzeiten.

Ein weiterer Vorteil eines Globoid-Kurvengetriebes ist die Möglichkeit, sogenannte Todpunkte der Getriebeausgangswelle vorgeben zu können, in denen die Ausgangswelle trotz andauerndem Antrieb der Eingangswelle fest steht. So wird im Falle der Erfindung die Schwenkbewegung des Greiferarmes erst nach Zurücklegen einer kurzen Anfangsöffnungsstrecke eingeleitet, wodurch gewährleistet wird, daß der Greiferarm auch beim Zurückschwenken mit Werkstück immer genügend Abstand zu allen Maschinenteilen wahrt. Ebenso erreicht der Greiferarm bereits an einem Punkt des Öffnungsweges, der vor der Betriebsendlage liegt, die Greifposition. Das weitere Öffnen des Werkzeugs bis zur Endlage beeinflußt aufgrund der entsprechenden Ausgestaltung des Globoid-Kurvengetriebes die Lage des Greiferarmes nicht mehr. Dadurch ergibt sich eine größere Toleranz für die Endlage der Öffnungsbewegung.

Das Globoid-Kurvengetriebe wird über eine mit der festen Werkzeugaufspannplatte verbundene Zahnstange angetrieben, die so am Globoid-Kurvengetriebe gelagert ist, daß sie im Eingriff mit einem mit der Eingangswelle des Getriebes fest verbundenen Antriebsritzel ist und bei Relativbewegungen zwischen den beiden Werkzeugaufspannplatten dieses dreht.
Erfindungsgemäß wird die Verbindung zwischen fester Werkzeugaufspannplatte und Zahnstange durch eine lösbare Kupplung hergestellt, die gelöst wird, sobald beim Öffnungsvorgang eine Betriebsendlage der beweglichen Werkzeugaufspannplatte überfahren wird. Hierdurch kann ein Überfahren des vorgesehenen Endpunktes der Globoid-Kurve vermieden werden. Zudem kann so eine unkontrollierte, da nicht vorgesehene, Weiterbewegung des Greiferarmes über die Greifposition hinaus verhindert werden, die bei einem Überfahren der Endlage eingeleitet würde und von der genauen Ausgestaltung der Globoid-Kurve abhängig ist.

Um den Zeitpunkt des Lösens der Kupplung genauso unabhängig von äußeren Parametern wie den Antrieb des Greiferarmes zu machen, wird auch hier eine öffnungswegabhängige Zwangssteuerung vorgesehen.

Erfindungsgemäß ist die Zahnstange so an dem Globoid-Kurvengetriebe gelagert, daß sie durch eine fest mit dem Getriebe verbundene Gabel gestützt wird. Die Gabel befindet sich im Eingriff mit einem zahnstangenseitigen mechanischen Kupplungslösemechanismus und ist so ausgebildet, daß sie bei Überfahren eines vorgegebenen Weges diesen betätigt.

Des weiteren ist die Stützfunktion der Gabel derart, daß die Zahnstange bei einer Schließbewegung der Werkzeugaufspannplatten nach einem Überfahren der Betriebsendlage problemlos wieder einkuppelt, wobei sich das Globoid-Kurvengetriebe in der genau dieser Lage entsprechenden Stellung befindet. Dies erspart ein mühsames Einpassen der Zahnstange in die Lagerung am Globoid-Kurvengetriebe und ein neues Einjustieren der genauen Stellung des Globoid-Kurvengetriebes im Verhältnis zur Öffnungsweite des Werkzeugs, wie es in einem vergleichbaren Fall früher nötig war.

Vorteilhafterweise wird eine lösbare Kugelkupplung für die Verbindung von Zahnstange und fester Werkzeugaufspannplatte vorgesehen. Diese ist derart ausgebildet, daß das zur festen Werkzeugaufspannplatte hinweisende Ende der Zahnstange, das eine ringförmige Nut aufweist, in ein im wesentlichen hohlzylinderförmiges, fix mit der festen Werkzeugaufspannplatte verbundenes Kupplungsteil einfährt. In diesem sind Kugeln beweglich angeordnet, die in die Nut der Zahnstange eingreifen und durch eine die Zahnstange umgebende im wesentlichen hohlzylinderförmige Hülse in der Nut verankert werden. Diese Hülse ist gegen die Zahnstange mit einer Feder verspannt und längs beweglich. Auf der Seite der Zahnstange weist sie eine wulstartige Verdickung auf. Die die Zahnstange stützende Gabel umgreift die Hülse und ist längs dieser im wesentlichen frei beweglich. Wird allerdings beim Öffnen des Werkzeugs die Betriebsendlage überfahren, greift die Gabel an dem Wulst der Hülse ein und zieht diese gegen die Federspannung von der festen Werkzeugaufspannplatte weg, wodurch die Kugeln freigegeben werden und die Kupplung gelöst wird. Sobald dies geschehen ist, kann keine Relativbewegung zwischen Globoid-Kurvengetriebe und Zahnstange mehr stattfinden und sowohl Greiferarm als auch Globoid-Kurvengetriebe sind in ihrer Position - der Greifposition - unabhängig von der weiteren Bewegung der beweglichen Werkzeugaufspannplatte fixiert.

In einer besonders bevorzugten Ausgestaltungsform der vorliegenden Erfindung ist an der Gabel eine Kopplungseinrichtung vorgesehen, über die bei eingekuppelter Zahnstange eine feste Verbindung zwischen Gabel und Hülse herstellbar ist. Dies bewirkt, daß die Hülse bereits beim Öffnen des Werkzeugs gegen die Federspannung zwischen Hülse und Zahnstange zurückgezogen wird, und somit die Kupplung zwischen Zahnstange und fester Werkzeugaufspannplatte gleich zu Beginn der Öffnungsbewegung gelöst wird, und zwar zu einem Zeitpunkt, in dem sich das Globoid-Kurvengetriebe noch in einem Todpunkt befindet, in dem die Bewegung der Eingangswelle keine Bewegung der Ausgangswelle verursacht. Dies hat den Vorteil, daß der Greiferarm in seiner Ruheposition außerhalb des Einspritzbereichs verharrt, da keine weitere Relativbewegung zwischen Zahnstange und Globoid-Kurvengetriebe stattfinden kann. Vor allem bei Wartungsarbeiten oder Werkzeugwechseln ist es günstig, daß das Werkzeug geöffnet werden kann, ohne daß der Greiferarm in die Greifposition gefahren wird.

Die Kopplungseinrichtung kann zum Beispiel einen Bolzen umfassen, der bei Betätigung in eine entsprechende Vertiefung in der Hülse greift. Vorteilhafterweise erfolgt die Ansteuerung des Bolzens hydraulisch.

Anhand der folgenden Figuren soll eine spezielle Ausführungsform der Erfindung näher erläutert werden. Es zeigen:
- Fig. 1: eine Schnittdarstellung des Globoid-Kurvengetriebes einer bevorzugten Ausführungsform der erfindungsgemäßen Vorrichtung mit Greiferarm in Ruhe- bzw. Greifposition,
- Fig. 2: eine Schnittdarstellung entlang der Längsachse einer bevorzugten Ausführungsform der erfindungsgemäßen Vorrichtung mit einer Zahnstange mit lösbarer Kugelkupplung in vier verschiedenen Öffnungsstellungen des Werkzeugs, und
- Fig. 3: eine Draufsicht auf eine bevorzugte Ausführungsform der erfindungsgemäßen Vorrichtung.

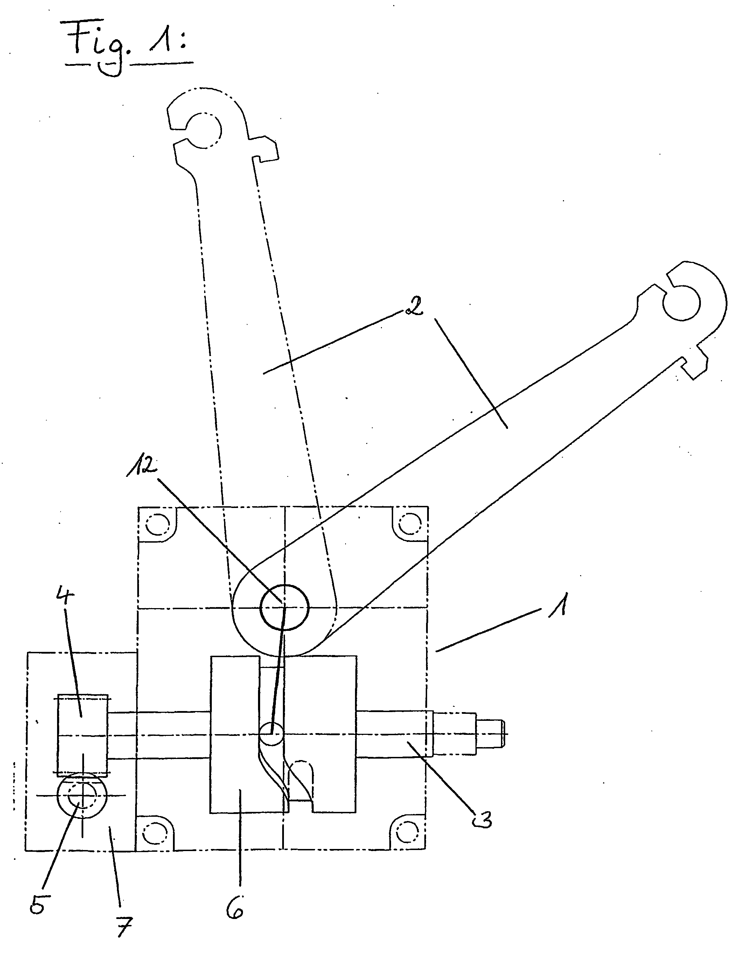

In Fig. 1 ist eine bevorzugte Ausführungsform der erfindungsgemäßen Vorrichtung im Schnitt dargestellt. Ein Globoid-Kurvengetriebe 1 ist geöffnet, und eine Globoid-Kurvenwalze 6 mit einer Eingangswelle 3, die durch ein fest mit ihr verbundenes Antriebsritzel 4 angetrieben wird, wird sichtbar. Durch die Bewegung einer Zahnstange 5, mit der sich das Antriebsritzel 4 im Eingriff befindet, senkrecht zur Bildebene wird das Antriebsritzel 4 zur Rotation um die Eingangswelle 3 veranlasst. Die Zahnstange 5 ist über ein Lager 7 mit dem Globoid-Kurvengetriebe 1 längsbeweglich verbunden. Durch die Drehbewegung der Globoid-Kurvenwalze 6 bei gleichzeitiger Längsbewegung des Globoid-Kurvengetriebes 1 wird ein Greiferarm 2 entlang eines vorbestimmten dreidimensionalen Weges geführt. In der Schnittebene führt der Greiferarm 2 eine Drehbewegung um eine Ausgangsachse 12 des Globoid-Kurvengetriebes 1 aus.

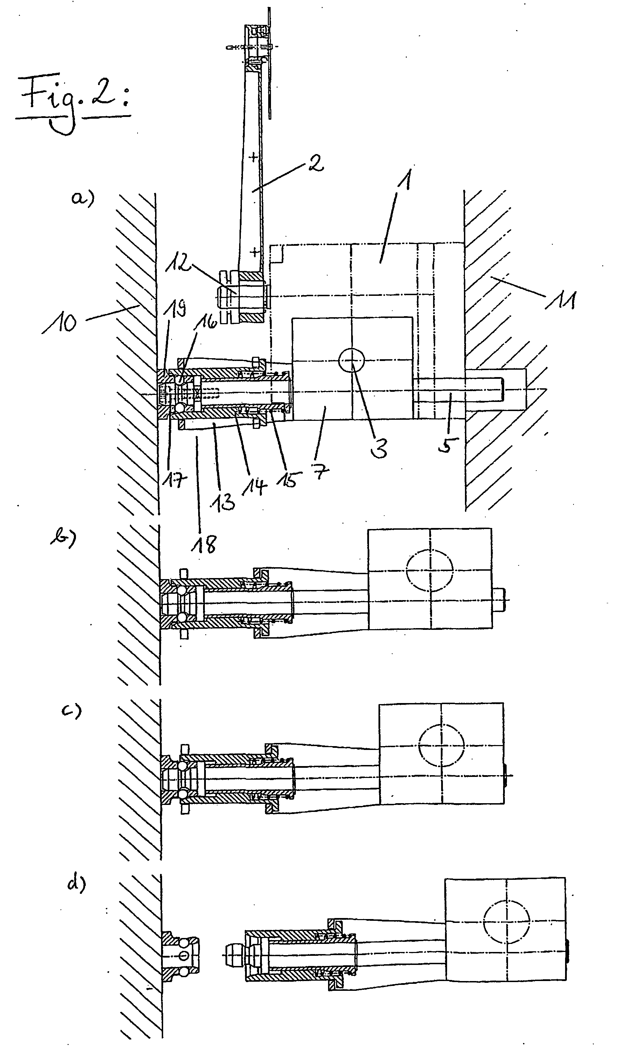

Fig. 2 zeigt eine Schnittansicht einer erfindungsgemäßen Vorrichtung von der Seite in verschiedenen Öffnungsstadien einer festen 10 und einer beweglichen Werkzeugaufspannplatte 11.

In Fig. 2a ist die Zahnstange 5 mittels einer lösbaren Kupplung 18 mit der festen Werkzeugaufspannplatte 10 verbunden. Das Globoid-Kurvengetriebe 1 mit der Eingangswelle 3 und dem Lager 7 zur Sicherung der Zahnstange 5 am Getriebe 1 sind nur schematisch dargestellt. An einer Ausgangswelle 12 des Globoid-Kurvengetriebes 1 ist der Greiferarm 2 angebracht. Ein Verbindungsglied in Form einer gebogenen Gabel 13 ist am Globoid-Kurvengetriebe 1 befestigt und steht mit der Kupplung 18 im Eingriff. Im wesentlichen ist die lösbare Kupplung 18 wie folgt aufgebaut. In die Nut eines vorderen Zahnstangenendes 17 können Kugeln 16 greifen, die beweglich in einem an der festen Werkzeugaufspannplatte angebrachten Kupplungsteil 19 gelagert sind. Durch eine im wesentlichen hohlzylinderförmige, beweglich um die Zahnstange 5 angeordnete Hülse 14 werden sie im geschlossenen Zustand formschlüssig fixiert. Die Hülse 14 wird durch eine Feder 15 gegen die Zahnstange 5 vorgespannt, wodurch die Kupplung 18 im geschlossenen Zustand verriegelt wird. Die Gabel 13 umfasst die Hülse 14 im wesentlichen frei beweglich, nur ein am, in Fig. 2 rechten, Ende der Hülse 14 vorgesehener erhabener Wulst verhindert das Abgleiten der Gabel 13 von dieser bei Verschieben der Gabel 13 nach rechts.

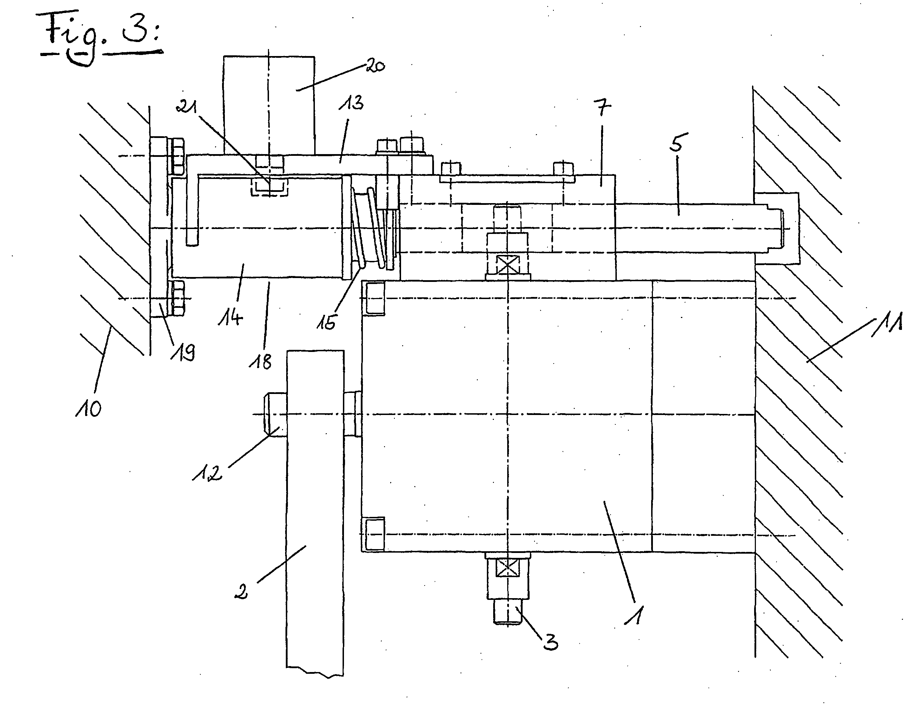

In Fig. 3 ist die erfindungsgemäße Vorrichtung in der Draufsicht dargestellt, die Kupplung 18 ist ebenso wie nicht dargestellte, auf den beiden Werkzeugaufspannplatten 10, 11 angebrachte Werkzeughälften geschlossen. Der an der Ausgangswelle 12 des Globoid-Kurvengetriebes 1 angebrachte Greiferarm 2 befindet sich im Ruhezustand außerhalb des Werkzeugs. An der fest mit dem Lager 7 der Zahnstange 5 verbundenen Gabel 13 ist eine Kopplungseinrichtung 20 befestigt, die einen Bolzen 21 umfasst, der formschlüssig in eine Vertiefung in der Hülse 14 eingefahren werden kann.

Die Funktionsweise der erfindungsgemäßen Vorrichtung soll nun anhand der Fig. 2a-d näher erläutert werden.

Fig. 2a zeigt die Kupplung 18 in verriegeltem Zustand, die nicht dargestellten Werkzeughälften sind zusammengefahren und der Greiferarm 2 befindet sich in seiner Ruheposition außerhalb des Werkzeugs.

Beim Öffnen des Werkzeugs, Fig. 2b, vergrößert sich der Abstand zwischen fester 10 und beweglicher Werkzeugaufspannplatte 11, und das Globoid-Kurvengetriebe 1 wird in Fig. 2 nach rechts verfahren. Durch die Bewegung gleitet die im Eingriff mit der Hülse 14 stehende Gabel 13 entlang der Hülse nach rechts. Der Greiferarm 13 beginnt nach Überwinden eines Todpunkts zu Beginn der Öffnungsbewegung seinen Schwenk in das Werkzeug und erreicht die Greifposition kurz bevor die Betriebsendlage der beweglichen Werkzeugaufspannplatte 11 erreicht ist. Während der Restbewegung zwischen Erreichen der Greifposition und der Endlage befindet sich das Globoid-Kurvengetriebe 1 wieder, wie schon zu Beginn der Öffnungsbewegung, in einem Todpunkt, und trotz Relativbewegung zwischen Zahnstange 5 und Antriebsritzel 4 wird die Ausgangswelle 12 nicht angetrieben. In der Endlage, in der die Vorrichtung in Fig. 2b dargestellt ist, ist die Kupplung 18 eingerastet, die Gabel 13 befindet sich direkt vor einem am, in der Figur rechten, Ende der Hülse 14 angebrachten Wulst, übt aber auf diesen noch keine Kraft aus.

Im ordnungsgemäßen Betrieb verharren die Werkzeugaufspannplatten 10, 11 in der Endlage, eine am Greiferarm 2 angebrachte, nicht dargestellte Greifvorrichtung entnimmt das Werkstück aus dem Werkzeug oder deponiert ein Werkstück dort, und mit der einsetzenden Schließbewegung wird der Greiferarm 2 wieder aus dem Werkzeug in seine Ruheposition ausgeschwenkt. In der vorliegenden Ausführungsform vollführt der Greiferarm 2 hierbei einen Schwenk von in etwa 60°, es sind aber beliebige andere Winkel vorstellbar.

Um die Entnahme/Deposition eines Werkstücks im Werkzeug zu vereinfachen, kann das Globoid-Kurvengetriebe 1 zusätzlich relativ zur beweglichen Werkzeugaufspannplatte 11 längs bewegbar gelagert sein.

Wird, wie in Fig. 2c gezeigt, die Öffnungsbewegung der Werkzeugaufspannplatten 10, 11 nicht in der Endlage abgebrochen, sondern vergrößert sich der Abstand zwischen den beiden Werkzeugaufspannplatten 10, 11 weiter, greift die Gabel 13 an dem Wulst rechts an der Hülse 14 ein und zieht diese gegen die Feder 15 ab. Dadurch werden die in der Nut fixierten Kugeln 16 frei und die Kupplung 18 löst sich. Bei der Bewegung zwischen Eingreifen der Gabel 13 und Lösen der Kupplung 18 befindet sich das Globoid-Kurvengetriebe 1 weiter in einem Todpunkt, der Greiferarm 2 bleibt also in der Greifposition fixiert. Fig. 2d zeigt die erfindungsgemäße Vorrichtung mit gelöster Kupplung 18.

Werden die über die Endlage geöffneten Werkzeugaufspannplatten 10, 11 wieder geschlossen, so wird der in Fig. 2a-d dargestellte Vorgang umgekehrt durchlaufen, das vordere, in der Figur linke Ende 17 der Zahnstange 5 rastet im an der festen Werkzeugaufspannplatte 10 angebrachten Kupplungsteil 19 ein, bei Erreichen der Endlage werden die Kugeln 16 durch die Hülse 14 in der Nut der Zahnstange 5 fixiert. Die Hülse 14 selbst wird durch die gegen die Zahnstange 5 gespannte Feder 15 gesichert, und die Gabel 13 gleitet wieder frei über die Hülse 14, der Spritzbetrieb kann wieder aufgenommen werden.

Fig. 3 zeigt eine weitere vorteilhafte Ausfühnzngsform der Erfindung in der Draufsicht. An der Gabel 13 ist eine Kopplungseinrichtung 20 angebracht, die einen Bolzen 21 umfasst, der angesteuert werden kann, so daß er zwischen Gabel 13 und Hülse 14 eine feste Verbindung herstellt. Die Werkzeugaufspannplatten 10, 11 befinden sich in der Schließstellung, der Greiferarm 2 ist in seiner Ruheposition. Wird nun bei verriegeltem Bolzen 21 eine Öffnungsbewegung eingeleitet, so wird die Hülse 14 sofort von der Gabel 13 mitgenommen und die Kupplung 18 zwischen Zahnstange 5 und fester Werkzeugaufspannplatte 10 schon zu Beginn der Öffnungsbewegung gelöst, während sich das Globoid-Kurvengetriebe 1 noch in seinem vorderen Todpunkt befindet.

Die Spritzgießmaschine kann so geöffnet werden, ohne daß der Greiferarm 2 aus seiner Ruheposition ausschwenkt. Vor allem für Wartungsarbeiten und Werkzeugwechsel ist dies von Vorteil.

Die vorliegende Erfindung stellt somit eine für den Betrieb mit einer Spritzgießmaschine mit einer festen und einer beweglichen Werkzeugaufspannplatte gedachte Vorrichtung für die Entnahme und /oder das Einlegen von Werkstücken in das Werkzeug einer solchen Spritzgießmaschine vor, die besonders günstige Betriebseigenschaften hat.

### Bezugszeichenliste

- 1: Globoid-Kurvengetriebe
- 2: Greiferarm
- 3: Eingangswelle
- 4: Antriebsritzel
- 5: Zahnstange
- 6: Globoid-Kurvenwalze
- 7.: Zahnstangen-Lagerung

- 10: feste Werkzeugaufspannplatte
- 11: bewegliche Werkzeugaufspannplatte
- 12: Ausgangswelle
- 13: Gabel
- 14: Hülse
- 15: Feder
- 16: Kugel
- 17: vorderes Zahnstangenende
- 18: lösbare Kupplung
- 19: festes Kupplungsteil

- 20: Kopplungseinrichtung
- 21: Bolzen

## Patentansprüche

1. Vorrichtung zum Entnehmen und/oder Einlegen von Werkstücken in ein Spritzgießwerkzeug einer Spritzgießmaschine, mit einer festen (10) und einer beweglichen Werkzeugaufspannplatte (11), mit einer festen und einer beweglichen Werkzeughälfte des Spritzgießwerkzeugs, mit einer mit der festen Werkzeugaufspannplatte (10) verbundenen Zahnstange (5), mit einem an der beweglichen Werkzeugaufspannplatte oder an der auf dieser angebrachten beweglichen Werkzeughälfte angebrachten Globoid-Kurvengetriebe (1), dessen Antriebsritzel (4) mit der Zahnstange (5) in Eingriff steht, mit einem auf der Ausgangswelle (12) des Globoidgetriebes (1) befestigten Greiferarm (2),
**dadurch gekennzeichnet,**
**daß** die Verbindung zwischen der Zahnstange (5) und der festen Werkzeugaufspannplatte (10) als lösbare Kupplung ausgebildet ist, und daß Mittel zum Lösen der Kupplung bei Überschreiten eines vorgebbaren Abstandes zwischen der festen (10) und der beweglichen Werkzeugaufspannplatte (11) vorgesehen sind.

2. Vorrichtung nach Anspruch 1,
**dadurch gekennzeichnet,**
**daß** die Zahnstange (5) derart an dem Globoid-Kurvengetriebe (1) gelagert ist, daß bei Unterschreiten eines vorgegebenen Abstands zwischen der festen (10) und der beweglichen Werkzeugaufspannplatte (11) ein Wiedereinkuppeln der Zahnstange (5) an der festen Werkzeugaufspannplatte (10) erfolgt.

3. Vorrichtung nach Anspruch 1 oder 2,
**dadurch gekennzeichnet,**
**daß** als Kupplung eine lösbare Kugelkupplung vorgesehen ist.

4. Vorrichtung nach Anspruch 1 bis 3,
**dadurch gekennzeichnet,**
**daß** mechanische Mittel zum Lösen bzw. Schließen der Kupplung vorgesehen sind.

5. Vorrichtung nach Anspruch 4,
**dadurch gekennzeichnet,**
**daß** ein mit dem Globoid-Kurvengetriebe (1) fest verbundenes Verbindungsglied (13) mit einem Öffnungsmechanismus (14) der Kupplung (18) in Eingriff steht.

6. Vorrichtung nach Anspruch 5,
**dadurch gekennzeichnet,**
**daß** an dem Verbindungsglied (13) eine Kopplungseinrichtung (20) vorgesehen ist, über die bei eingekuppelter Zahnstange (5) eine feste Verbindung zwischen Verbindungsglied (13) und einem Öffnungsmechanismus (14) der Kupplung (18) herstellbar ist.

7. Vorrichtung nach Anspruch 6,
**dadurch gekennzeichnet,**
**daß** die Kopplungseinrichtung (20) einen Bolzen (21) umfasst.

8. Vorrichtung nach Anspruch 7,
**dadurch gekennzeichnet,**
**daß** eine hydraulische Ansteuerung für den Bolzen (21) vorgesehen ist.

9. Vorrichtung nach einem der hervorgehenden Ansprüche,
**dadurch gekennzeichnet,**
**daß** das Globoid-Kurvengetriebe (1) längsbeweglich an der beweglichen Werkzeugaufspannplatte (11) oder an der auf dieser angebrachten beweglichen Werkzeughälfte gelagert ist.

## Claims

1. A device for removing and/or inserting workpieces into an injection mould of an injection moulding machine, comprising a fixed (10) and a movable platen (11), comprising a fixed and a movable half-mould, comprising a toothed rack (5) connected to the fixed platen (10), comprising a globoid cam gear (1) attached to the movable platen or to the movable half-mould attached thereto, whose driving pinion (4) is in engagement with the toothed rack (5), comprising a gripper arm (2) affixed to the output shaft (12) of the cam gear (1),
**characterised in**
**that** the connection between the toothed rack (5) and the fixed platen (10) is embodied as a detachable coupling and that means are provided for releasing the coupling when a predefinable distance is exceeded between the fixed (10) and the movable platen (11).

2. The device according to claim 1,
**characterised in**
**that** the toothed rack (5) is mounted on the globoid cam gear (1) such that when the distance between the fixed (10) and the movable platen (11) falls below a predefined value, the rack (5) is re-coupled on the fixed platen (10).

3. The device according to claim 1 or 2,
**characterised in**
**that** a detachable ball coupling is provided as a coupling.

4. The device according to claims 1 to 3
**characterised in**
**that** mechanical means are provided for releasing or closing the coupling.

5. The device according to claim 4,
**characterised in**
**that** a connecting member (13) fixedly connected to the globoid cam gear (1) is in engagement with an opening mechanism (14) of the coupling (18).

6. The device according to claim 5,
**characterised in**
**that** a coupling device (20) is provided on the connecting member (13) by which means a fixed connection can be made between connecting member (13) and an opening mechanism (14) of the coupling (18) when the toothed rack (5) is coupled in.

7. The device according to claim 6,
**characterised in**
**that** the coupling device (20) comprises a bolt (21).

8. The device according to claim 7,
**characterised in**
**that** a hydraulic control is provided for the bolt (21).

9. The device according to any one of the preceding claims,
**characterised in**
**that** the globoid cam gear (1) is mounted so that it can be moved longitudinally on the movable platen (11) or on the movable half-mould attached thereon.

## Revendications

1. Dispositif de prélèvement et/ou d'insertion de pièces dans un moule d'injection d'une presse d'injection, comportant un plateau porte-moule fixe (10) et un mobile (11), un demi-moule fixe et un mobile, une crémaillère (5) reliée au plateau fixe (10), un engrenage à came globique (1) installé surle plateau mobile ou sur le demi-moule mobile installée sur celui-ci, dont le pignon entraîneur (4) est en prise avec la crémaillère (5), un bras de préhension (2) fixé sur l'arbre de sortie (12) de l'engrenage globique (1),
**caractérisé en ce que**
la liaison entre la crémaillère (5) et le plateau fixe (10) est réalisée sous forme d'un accouplement détachable et qu'il est prévu des moyens pour détacher l'accouplement en cas de dépassement d'une distance prescriptible entre le plateau fixe (10) et le mobile (11).

2. Dispositif selon la revendication 1,
**caractérisé en ce que**
la crémaillère (5) est logée sur l'engrenage à came globique (1) de manière à ce qu'en cas de sous-dépassement d'une distance prescriptible entre la plaque de montage de moule fixe (10) et la mobile (11), il se produise un ré-embrayage de la crémaillère (5) sur le plateau fixe (10).

3. Dispositif selon la revendication 1 ou 2,
**caractérisé en ce que**
on utilise comme accouplement un accouplement sphérique détachable.

4. Dispositif selon les revendications 1 à 3,
**caractérisé en ce que**
des moyens mécaniques de détachement ou de fermeture de l'accouplement sont prévus.

5. Dispositif selon la revendication 4,
**caractérisé en ce que**
un élément de liaison (13) relié fixement à l'engrenage à came globique (1) est en prise avec un mécanisme d'ouverture (14) de l'accouplement (18).

6. Dispositif selon la revendication 5,
**caractérisé en ce que**,
sur l'élément de liaison (13), il est prévu un dispositif d'accouplement (20) grâce auquel, la crémaillère (5) étant embrayée, une liaison fixe entre l'élément de liaison (13) et un mécanisme d'ouverture (14) de l'accouplement (18) peut être établie.

7. Dispositif selon la revendication 6,
**caractérisé en ce que**
le dispositif d'accouplement (20) comprend une broche (21).

8. Dispositif selon la revendication 7,
**caractérisé en ce que**
il est prévu une commande hydraulique pour la broche (21).

9. Dispositif selon l'une quelconque des revendications précédentes,
**caractérisé en ce que**
l'engrenage à came globique (1) est logée avec une mobilité latérale sur le plateau mobile (11) ou sur le demi-moule mobile installée sur celui-ci.
